# EUROPEAN PATENT APPLICATION

(11) **EP 4 224 558 A1**
(43) Date of publication of application: **09.08.2023**
(21) Application number: 21875477.8
(22) Date of filing: 27.09.2021
(51) Int. Cl.: H01M 4/131, H01M 4/134, H01M 4/40, H01M 4/505, H01M 4/525, H01M 10/052, H01M 10/0568

(54) **NONAQUEOUS ELECTROLYTE SECONDARY BATTERY**

(30) Priority: 30.09.2020 JP 2020164937
(71) Applicant: Panasonic Intellectual Property Management Co., Ltd., Osaka-shi, Osaka 540-6207 (JP)
(72) Inventor: SADAKANE, Takuya, Chuo-ku, Osaka-shi, Osaka 540-6207 (JP); KANO, Akira, Chuo-ku, Osaka-shi, Osaka 540-6207 (JP)
(74) Representative: Novagraaf International SA
(86) International application number: PCT/JP2021/035243
(87) International publication number: WO 2022/071175

(57) **Abstract**

A non-aqueous electrolyte secondary battery includes a positive electrode, a negative electrode, and a non-aqueous electrolyte, in which lithium metal deposits on the negative electrode during charge, and the lithium metal dissolves from the negative electrode into the non-aqueous electrolyte during discharge. The positive electrode includes a positive electrode active material, the positive electrode active material includes a composite oxide containing lithium and a transition metal, and the non-aqueous electrolyte contains an oxalate salt. The composite oxide contains Ni and at least one selected from the group consisting of Fe, V, Ti, and Nb, and has a structure based on a crystal structure belonging to a space group R-3m.

## Description

### [Technical Field]

The present disclosure relates to a non-aqueous electrolyte secondary battery.

### [Background Art]

Non-aqueous electrolyte secondary batteries represented by lithium-ion secondary batteries have high energy density and high output, and have been seen as promising power sources for mobile devices such as smartphones, driving power sources for vehicles such as electric cars, and power storage apparatus for storing natural energy such as solar energy. For the positive electrode active material of a non-aqueous electrolyte secondary battery, for example, a composite oxide containing lithium and a transition metal is used.

With an aim to achieve a higher battery capacity, studies have been made on a non-aqueous electrolyte secondary battery of a type in which lithium metal deposits on a negative electrode current collector during charge and the lithium metal dissolves during discharge (e.g., Patent Literature 1).

### [Citation List]

### [Patent Literature]

[Patent Literature 1] Japanese Laid-Open Patent Publication No. H9-259929

### [Summary of Invention]

When a non-aqueous electrolyte secondary battery is exposed to high temperatures due to an internal short circuit or other causes, oxygen is generated from the positive electrode containing a composite oxide. In the battery disclosed in Patent Literature 1, it may occur that the oxygen generated from the positive electrode tends to react with the lithium metal deposited on the negative electrode current collector, and heat is generated in the battery as the above reaction proceeds, facilitating the oxygen generation from the positive electrode, which results in a rise in battery internal pressure. Moreover, it may occur that the non-aqueous electrolyte is oxidatively decomposed by the oxygen generated from the positive electrode, and due to the gas generation accompanying therewith, the battery internal pressure rises. The rise in battery internal pressure may cause a damage to the battery case, and improvement in battery safety has been demanded.

In view of the above, one aspect of the present disclosure relates to a non-aqueous electrolyte secondary battery, including: a positive electrode; a negative electrode; and a non-aqueous electrolyte, wherein lithium metal deposits on the negative electrode during charge, and the lithium metal dissolves from the negative electrode into the non-aqueous electrolyte during discharge, the positive electrode includes a positive electrode active material, the positive electrode active material includes a composite oxide containing lithium and a transition metal, the non-aqueous electrolyte contains an oxalate salt, the composite oxide contains Ni and at least one selected from the group consisting of Fe, V, Ti, and Nb, and has a structure based on a crystal structure belonging to a space group R-3m.

According to the present disclosure, the safety of the non-aqueous electrolyte secondary battery can be enhanced.

### [Brief Description of Drawing]

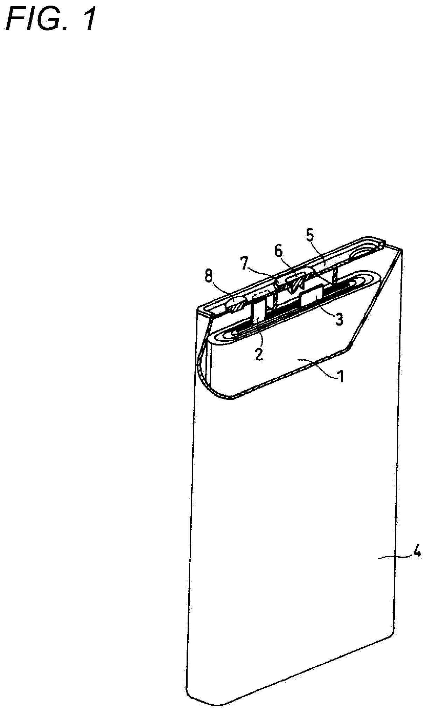

[FIG. 1] A partially cut-away schematic oblique view of a non-aqueous electrolyte secondary battery according to one embodiment of the present disclosure.

### [Description of Embodiments]

A non-aqueous electrolyte secondary battery according to an embodiment of the present disclosure includes a positive electrode, a negative electrode, and a non-aqueous electrolyte, in which lithium metal deposits on the negative electrode during charge, and the lithium metal dissolves from the negative electrode into the non-aqueous electrolyte during discharge. The positive electrode includes a positive electrode active material, and the positive electrode active material includes a composite oxide containing lithium and a transition metal. The non-aqueous electrolyte contains an oxalate salt. The composite oxide contains, as the transition metal, Ni and at least one selected from the group consisting of Fe, V, Ti, and Nb, and has a structure based on a layered rock-salt type crystal structure belonging to a space group R-3m. This configuration can reduce the rate of gas generation when the battery generates heat.

When the battery is exposed to high temperatures due to an internal short circuit or other causes, the composite oxide, which is the positive electrode active material, is thermally decomposed, to generate oxygen. Especially, a composite oxide containing Ni can realize a high capacity by increasing the Ni content, but is readily thermally decomposed. Due to the thermal decomposition, the crystal structure changes from the structure based on a layered rock-salt type crystal structure belonging to the space group R-3m to a structure based on a non-layered rock-salt type structure belonging to a space group Fm-3m, through which oxygen is released. However, by containing at least one selected from the group consisting of Fe, V, Ti, and Nb in the composite oxide, the oxygen release speed can be slowed down. This is presumably because when at least one selected from the group consisting of Fe, V, Ti, and Nb is contained, during the thermal decomposition, the crystal structure goes through a structure based on a spinel structure belonging to a space group Fd-3m. From the point of slowing down the oxygen release speed, among the group consisting of Fe, V, Ti, and Nb, it is preferable to contain Fe in the composite oxide.

Therefore, when the rate of oxygen generation at the positive electrode is reduced, the rate of reaction between the oxygen generated from the positive electrode and the lithium metal deposited at the surface of the negative electrode is also reduced. As a result, the heat generation of the battery associated with the above reaction is suppressed, and further oxygen generation from the positive electrode can also be suppressed. Thus, the rise in battery internal pressure due to the oxygen generation from the positive electrode is suppressed. Furthermore, oxidative decomposition of the non-aqueous electrolyte due to the oxygen generated from the positive electrode is suppressed, and the rise in battery internal pressure due to the gas generation associated with the above oxidative decomposition is also suppressed.

The non-aqueous electrolyte contains an oxalate salt. The oxalate salt is a salt containing a cation (e.g., lithium ion) and an anion of an oxalate complex. When an oxalate salt is included in the non-aqueous electrolyte, due to the interaction between the anion of the oxalate complex and the lithium, lithium metal tends to deposit uniformly in the form of fine particles, and local deposition of lithium metal in a dendritic form is suppressed. Thus, the surface area of the lithium metal is reduced, and the reaction between the oxygen generated from the positive electrode and the lithium metal is further suppressed, and the heat generation of the battery associated with the above reaction is further suppressed. As a result, the rise in battery internal pressure due to the oxygen generation from the positive electrode is further suppressed.

Therefore, by using the non-aqueous electrolyte containing an oxalate salt, in combination with the composite oxide containing at least one selected from the group consisting of Fe, V, Ti, and Nb, the reaction between the oxygen generated from the positive electrode and the lithium metal is synergistically suppressed, and the heat generation of the battery can be remarkably suppressed. Furthermore, the rise in battery internal pressure due to the oxygen generation from the positive electrode is remarkably suppressed, and the damage to the battery case due to the rise in battery internal pressure is suppressed, leading to an improved battery safety.

The oxalate salt is preferably lithium difluorooxalate borate (LiFOB). The concentration of the oxalate salt (the concentration of the anion of the oxalate complex) in the non-aqueous electrolyte may be, for example, 0.05 mol/L or more and 1 mol/L or less. The concentration of the oxalate salt in the non-aqueous electrolyte is preferably 0.2 mol/L or more and 0.6 mol/L or less, from the point of suppressing the reaction between the oxygen and the lithium metal.

The composite oxide may further contain Al. By containing Al, the crystal structure of the composite oxide is stabilized, and the thermal stability is enhanced.

More specifically, for example, the composite oxide may be represented by a general formula LiNi_{1-x-y}M¹ₓM²_{y}O₂, where 0.03 ≤ x ≤ 0.15 and 0.02 ≤ y ≤ 0.6. M¹ contains at least one selected from the group consisting of Fe, Ti, V, and Nb. M² contains at least one selected from the group consisting of Al, Mn, and Co.

In view of increasing the capacity, in the composite oxide, the atomic ratio of Ni to the total of Ni, M¹, and M² is preferably 0.55 or more and less than 1, more preferably 0.7 or more and less than 1, further more preferably 0.8 or more and less than 1. That is, in the above general formula, x+y ≤ 0.45 is preferable, x+y ≤ 0.3 is more preferable, and x+y ≤ 0.2 is further more preferable. When the Ni ratio is 0.7 or more (i.e., x+y is 0.3 or less), a large amount of oxygen is generated when the battery is exposed to high temperatures. Therefore, with the configuration of the present disclosure, an effect of suppressing the rise in battery internal pressure due to the oxygen generation from the positive electrode can remarkably obtained.

With regard to the element M¹, 50 atm% or more thereof may be iron (Fe), and 90 atm% or more or 95% or more thereof may be iron (Fe). The element M¹ may be substantially iron (Fe) only. The composite oxide may be represented by LiNi_{1-x-y}FeₓM²yO₂, where 0.03 ≤ x ≤ 0.15 and 0.02 ≤ y ≤ 0.6.

In view of improving the output characteristics, the element M² is added to the composite oxide. The element M² preferably contains at least aluminum (Al). M² may contain Al, and manganese (Mn) and/or cobalt (Co). When M² contains Co, during charge and discharge, the phase transition of the composite oxide containing Li and Ni is suppressed, and the stability of the crystal structure is improved, and the cycle characteristics are likely to be improved. When M² contains Mn and/or Al, the thermal stability is enhanced.

The atomic ratio x of M¹ to the total of Ni, M¹, and M² is preferably 0.06 ≤ x ≤ 0.15, more preferably 0.06 ≤ x ≤ 0.12, further more preferably 0.09 ≤ x ≤ 0.12.

The atomic ratio y of M² to the total of Ni, M¹, and M² is preferably 0.02 ≤ y ≤ 0.27, more preferably satisfies 0.02 ≤ y ≤ 0.1, in view of achieving a high capacity by increasing the Ni ratio while obtaining an effect of improving the stability of the composite oxide produced by the element M².

When the element M² contains Co, the atomic ratio of Co to the total of Ni, M¹, and M² may be above 0 and 0.2 or less. In this case, high capacity and high output are likely to be maintained, and, the stability of the crystal structure during charge and discharge is likely to be improved. When the element M² contains Al, the atomic ratio of Al to the total of Ni, M¹, and M² may be above 0 and 0.05 or less. In this case, high capacity and high output are likely to be maintained, and the thermal stability tends to be enhanced.

With regard to the atomic ratio x+y of the total of M¹ and M² to the total of Ni, M¹, and M², when x+y is 0.3 or less, the proportion of Ni in the metals other than Li is large, the thermal decomposition rate when the battery is exposed to high temperatures is accelerated, and the amount of oxygen generated per unit time is increased. Especially when x+y is 0.2 or less, the oxygen generation rate tends to be significantly increased. However, with the configuration of the present disclosure, the effect of suppressing the rise in battery internal pressure due to the oxygen generation from the positive electrode is remarkably obtained. Moreover, in this case, it is easy to increase the capacity, and the effect produced by Ni and the effect achieved by the elements M¹ and M² can be obtained in a balanced manner.

The composite oxide may contain an element other than lithium, in addition to the above Ni, and the elements M¹ and M². Specifically, the composite oxide may contain at least one element selected from the group consisting of copper (Cu), chromium (Cr), zirconium (Zr), vanadium (V), tantalum (Ta), molybdenum (Mo), magnesium (Mg), calcium (Ca), strontium (Sr), zinc (Zn), silicon (Si), and boron (B).

In the non-aqueous electrolyte secondary battery of the present embodiment, for example, 70% or more of the rated capacity is developed by the deposition and dissolution of lithium metal. The electron migration at the negative electrode during charge and during discharge is mainly due to the deposition and dissolution of lithium metal at the negative electrode. Specifically, 70 to 100% (e.g., 80 to 100% or 90 to 100%) of the electron migration (in other words, current flow) at the negative electrode during charge and during discharge is due to the deposition and dissolution of lithium metal. That is, the negative electrode in the non-aqueous electrolyte secondary battery according to the present embodiment differs from a negative electrode in which the electron migration at the negative electrode during charge and during discharge is mainly due to the absorption and release of lithium ions into or from the negative electrode active material (e.g., graphite).

In a battery in which lithium metal deposits on the negative electrode during charge, the open circuit potential (OCV: Open Circuit Voltage) of the negative electrode at full charge is, for example, 70 mV or less, relative to lithium metal. Here, "at full charge" means a state in which the battery is charged to, for example, a charged state (SOC: State of Charge) of 0.98C or more, where C is the rated capacity of the battery. The OCV of the negative electrode at full charge is measured by disassembling a fully charged battery in an argon atmosphere, to take out the negative electrode therefrom, and assembling a cell with lithium metal used as a counter electrode. The non-aqueous electrolyte of the cell may be of the same composition as that of the non-aqueous electrolyte in the disassembled battery, or, for example, a non-aqueous electrolyte as used in Example 1 described hereinafter may be used as a model non-aqueous electrolyte.

In the following, a configuration of the non-aqueous electrolyte secondary battery will be specifically described below.

### (Positive electrode)

The positive electrode includes, for example, a positive electrode current collector, and a positive electrode mixture layer supported on a surface of the positive electrode current collector. The positive electrode mixture layer can be formed by applying a positive electrode slurry prepared by dispersing a positive electrode mixture in a dispersion medium, onto a surface of a positive electrode current collector, followed by drying. The applied film after drying may be rolled as needed. The positive electrode material mixture layer may be formed on one side of the positive electrode current collector, or may be formed on both sides thereof. The positive electrode mixture contains, as essential components, a positive electrode active material and an additive, and may contain, as optional components, a binder, a conductive agent, and the like. As the dispersion medium, for example, N-methyl-2-pyrrolidone (NMP) is used.

The binder may be a resin material, examples of which include fluorocarbon resin, polyolefin resin, polyamide resin, polyimide resin, acrylic resin, vinyl resin, and polyvinylpyrrolidone, polyethersulfone, and a rubbery material. Examples of the fluorocarbon resin include polytetrafluoroethylene (PTFE) and polyvinylidene fluoride (PVDF). Examples of the rubbery material include styrene-butadiene copolymer rubber (SBR). The binder may be used singly, or in combination of two or more kinds.

Examples of the conductive agent include: carbon blacks, such as acetylene black; conductive fibers, such as carbon fibers and metal fibers; and fluorinated carbon. The conductive agent may be used singly, or in combination of two or more kinds.

For the positive electrode current collector, for example, a metal foil can be used. Examples of the metal constituting the positive electrode current collector include aluminum (Al), titanium (Ti), alloys containing these metal elements, and stainless steel. The thickness of the positive electrode current collector is not particularly limited, and is, for example, 3 to 50 µm.

### (Negative electrode)

The negative electrode may include a negative electrode current collector. In this case, lithium metal deposits on the surface of the negative electrode current collector during charge, and the lithium metal deposited on the surface of the negative electrode current collector dissolves in the non-aqueous electrolyte during discharge.

For the negative electrode current collector, for example, a metal foil can be used. The metal constituting the negative electrode current collector is preferably a metal that does not react with lithium metal, examples of which include copper (Cu), nickel (Ni), iron (Fe), and alloys containing these metal elements. The thickness of the negative electrode current collector is not particularly limited, and is, for example, 5 µm or more and 300 µm or less.

The negative electrode may include a negative electrode current collector, and a negative electrode mixture layer supported on a surface of the negative electrode current collector. However, in view of achieving a non-aqueous electrolyte secondary battery with high capacity, the thickness of the negative electrode mixture layer is set sufficiently thin so that lithium metal can deposit at the negative electrode during charge. In this case, a design capacity Cn accounted for by the negative electrode active material in the negative electrode mixture layer relative to a design capacity Cp of the positive electrode satisfies Cn/Cp < 1, and may satisfy Cn/Cp < 0.8. In this case, lithium metal deposits on the surface of the negative electrode mixture layer during charge, and the lithium metal deposited on the surface of the negative electrode mixture layer dissolves in the non-aqueous electrolyte during discharge.

The negative electrode mixture layer can be formed, for example, by applying a negative electrode slurry prepared by dispersing a negative electrode mixture into a dispersion medium, onto a surface of the negative electrode current collector, followed by drying. The applied film after drying may be rolled as needed. The negative electrode mixture layer may be formed on one side of the negative electrode current collector, or may be formed on both sides thereof. As the dispersion medium, for example, water or NMP is used.

The negative electrode mixture contains a negative electrode active material, as an essential component, and may contain, as optional components, a binder, a conductive agent, a thickener, and the like. As the binder and the conductive agent, those exemplified for the positive electrode can be used. Examples of the thickener include carboxymethyl cellulose (CMC) and modified products thereof (e.g., Na salts).

The negative electrode active material may contain a carbon material that absorbs and releases lithium ions. Examples of the carbon material that absorbs and releases lithium ions include graphite (natural graphite, artificial graphite), graphitizable carbon (soft carbon), non-graphitizable carbon (hard carbon). Among them, graphite is preferable because of its excellent stability during charge and discharge and its low irreversible capacity.

The negative electrode active material may contain an alloy-based material. The alloy-based material is a material containing at least one metal capable of forming an alloy with lithium, examples of which include silicon, tin, a silicon alloy, a tin alloy, and a silicon compound. The alloy-based material may be a composite material having a lithium ion conductive phase and silicon particles dispersed in the phase. As the lithium ion conductive phase, a silicate phase, a silicon oxide phase containing 95 mass% or more of silicon dioxide, a carbon phase, and the like may be used.

As the negative electrode active material, an alloy-based material and a carbon material may be used in combination. In this case, the mass ratio of the carbon material to the total of the alloy-based material and the carbon material is, for example, preferably 80 mass% or more, more preferably 90 mass% or more.

### (Non-aqueous electrolyte)

The non-aqueous electrolyte contains lithium ions and anions, and has lithium ion conductivity. The non-aqueous electrolyte contains at least an oxalate salt. The non-aqueous electrolyte may be in a liquid form. The non-aqueous electrolyte in a liquid form contains, for example, lithium ions, anions, and a non-aqueous solvent. The non-aqueous electrolyte in a liquid form is prepared by dissolving a lithium salt in a non-aqueous solvent. When the lithium salt dissolves in the non-aqueous solvent, lithium ions and anions are produced.

The non-aqueous electrolyte may be in a gel form. The non-aqueous electrolyte in a gel form contains, for example, lithium ions, anions, and a matrix polymer, and may further contain a non-aqueous solvent. As the matrix polymer, for example, a polymer material that forms a gel by absorbing the non-aqueous solvent is used. Examples of the polymer material include a fluorocarbon resin, an acrylic resin, and a polyether resin.

The anions that can be used include, in addition to an oxalate complex anion, any known anions that are used for non-aqueous electrolytes in lithium secondary batteries. Specific examples thereof include BF₄⁻, ClO₄⁻, PF₆⁻, CF₃SO₃⁻, CF₃CO₂⁻, and anions of imides. Examples of the anions of imides include N(SO₂CF₃)₂⁻, and N(CₘF₂ₘ₊₁SO₂)ₓ(CₙF₂ₙ₊₁SO₂)_{y}⁻, where m and n are independently 0 or an integer of 1 or more, x and y are independently 0, 1, or 2, and x+y = 2. The oxalate complex anion may contain boron and/or phosphorus. Examples of the oxalate complex anion include B(C₂O₄)₂⁻, difluorooxalate borate anion: BF₂(C₂O₄)⁻, PF₄(C₂O₄)⁻, and PF₂(C₂O₄)₂⁻. The anion may be used singly, or in combination of two or more kinds.

In view of suppressing the dendritic deposition of lithium metal, the non-aqueous electrolyte preferably includes at least an oxalate complex anion. The oxalate complex anion interacts with lithium, to make lithium metal more likely to be deposited uniformly in a fine particulate state. Therefore, local deposition of lithium metal tends to be suppressed. The oxalate complex anion may be used in combination with one or more other anions. The other anions may be, for example, PF₆⁻ and/or anions of imides.

The concentration of the anions in the non-aqueous electrolyte may be 0.5 mol/L or more and 3.5 mol/L or less. The concentration of the oxalate complex anion in the non-aqueous electrolyte may be 0.05 mol/L or more and 1 mol/L or less.

Examples of the non-aqueous solvent include esters, ethers, nitriles, amides, and halogen substituted derivatives of these. The non-aqueous solvent may be used singly, or in combination of two or more kinds. Examples of the halogen substituted derivatives include fluorides.

Examples of the ester include cyclic carbonic acid esters, chain carbonic acid esters, cyclic carboxylic acid esters, and chain carboxylic acid esters. The cyclic carbonic acid esters are exemplified by ethylene carbonate (EC) and propylene carbonate (PC). The chain carbonic acid esters are exemplified by dimethyl carbonate (DMC), ethyl methyl carbonate (EMC), and diethyl carbonate (DEC). The cyclic carboxylic acid esters are exemplified by γ-butyrolactone (GBL) and γ-valerolactone (GVL). The chain carboxylic acid esters are exemplified by ethyl acetate, propyl acetate, and methyl propionate (PM).

Examples of the ethers include cyclic ethers and chain ethers. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, and 1,2-diethoxyethane.

The non-aqueous electrolyte may contain at least one component selected from the group consisting of vinylene carbonate (VC), fluoroethylene carbonate (FEC), and vinyl ethylene carbonate (VEC). When the above components are contained, a favorable surface film is formed on the surface of the negative electrode, and the dendritic formation of lithium metal is suppressed.

### (Separator)

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of polyolefin, such as polypropylene and polyethylene.

The non-aqueous electrolyte secondary battery, for example, has a structure in which an electrode group formed by winding the positive electrode and the negative electrode with the separator interposed therebetween is housed in an outer body, together with the non-aqueous electrolyte. The wound electrode group may be replaced with a different form of electrode group, for example, a stacked electrode group formed by stacking the positive electrode and the negative electrode with the separator interposed therebetween. The non-aqueous electrolyte secondary battery may be in any form, such as cylindrical type, prismatic type, coin type, button type, or laminate type.

FIG. 1 is a partially cut-away schematic oblique view of a non-aqueous electrolyte secondary battery according to one embodiment of the present disclosure.

The battery includes a bottomed prismatic battery case 4, and an electrode group 1 and a non-aqueous electrolyte housed in the battery case 4. The electrode group 1 has a long negative electrode, a long positive electrode, and a separator interposed between the positive electrode and the negative electrode and preventing them from directly contacting with each other. The electrode group 1 is formed by winding the negative electrode, the positive electrode, and the separator around a flat plate-like winding core, and then removing the winding core.

To the negative electrode current collector of the negative electrode, a negative electrode lead 3 is attached at its one end, by means of welding or the like. The other end of the negative electrode lead 3 is electrically connected, via an insulating plate made of resin, to a negative electrode terminal 6 disposed at a sealing plate 5. The negative electrode terminal 6 is electrically insulated from the sealing plate 5 by a gasket 7 made of resin. To the positive electrode current collector of the positive electrode, a positive electrode lead 2 is attached at its one end, by means of welding or the like. The other end of the positive electrode lead 2 is connected, via the insulating plate, to the back side of the sealing plate 5. That is, the positive electrode lead 2 is electrically connected to the battery case 4 serving as a positive electrode terminal. The insulating plate provides electrical insulation between the electrode group 1 and the sealing plate 5 and between the negative electrode lead 3 and the battery case 4. The periphery of the sealing plate 5 is engaged with the opening end of the battery case 4, and the engaged portion is laser-welded. In this way, the opening of battery case 4 is sealed with the sealing plate 5. An injection port for non-aqueous electrolyte provided in the sealing plate 5 is closed with a sealing plug 8.

### <Examples>

In the following, Examples of the present disclosure will be more specifically described. It is to be noted, however, that the present invention is not limited to the following Examples.

### «Examples 1 to 4, Comparative Example 1»

### (1) Production of positive electrode

A hydroxide containing Ni, Co, Al, Mn, and/or Fe in the ratios as shown in Table 1 was synthesized by a coprecipitation method, and the synthesized hydroxide was mixed with lithium hydroxide monohydrate (LiOH·H₂O) so that the molar ratio of the total amount of the metal elements other than Li to Li was 1:1.02. The mixture was baked, under an oxygen flow with an oxygen concentration of 95% (flow rate: 5 L/min per 1 kg of the mixture), at a temperature elevation rate of 2.0 °C/min from room temperature to 650 °C, and then, baked at a temperature elevation rate of 1 °C/min from 650 °C to 780 °C, to give a composite oxide. The composite oxide after baking was washed with water, and subjected to solid-liquid separation, to obtain a positive electrode active material which is powder of a composite oxide having a water content of 3 to 8 mass%.

The obtained positive electrode active material was mixed with acetylene black (AB) and polyvinylidene fluoride (PVDF), to prepare a positive electrode mixture. N-methyl-2-pyrrolidone (NMP) was added to the positive electrode mixture, and stirred, to prepare a positive electrode slurry. In the positive electrode mixture, the mass ratio between the composite oxide, AB, and PVDF was set to 100:2:2.

The positive electrode slurry was applied onto a surface of an aluminum foil (thickness: 15 µm) serving as a positive electrode current collector, and the applied film was dried, and then rolled. In this manner, a positive electrode material mixture layer was formed on both sides of the aluminum foil, to give a laminate. The laminate was cut into a predetermined size, to obtain a positive electrode. Here, in a partial region of the positive electrode, a positive electrode current collector-exposed portion that does not have the positive electrode mixture layer was formed. To the positive electrode current collector-exposed portion, a positive electrode lead made of aluminum was attached at its one end, by means of welding.

### (2) Production of negative electrode

An electrolytic copper foil (thickness: 10 µm) serving as a negative electrode current collector was cut into a predetermined size, to obtain a negative electrode. To the negative electrode current collector, a negative electrode lead made of nickel was attached at its end, by means of welding.

### (3) Preparation of non-aqueous electrolyte

A non-aqueous electrolyte was prepared by dissolving LiPF₆ and LiBF₂(C₂O₄) in a non-aqueous solvent. The non-aqueous solvent used here was a mixed solvent containing fluoroethylene carbonate (FEC), ethyl methyl carbonate (EMC), and dimethyl carbonate (DMC) in a volume ratio of 20:5:75. The concentration of LiPF₆ in the non-aqueous electrolyte was set to 1.0 mol/L. The concentration of LiBF₂(C₂O₄) in the non-aqueous electrolyte was set to 0.5 mol/L.

### (4) Fabrication of non-aqueous electrolyte secondary battery

The positive electrode and the negative electrode were wound with a separator made of polyethylene interposed therebetween, to prepare a wound electrode group. After subjected to drying under vacuum, the electrode group was housed in a battery case also serving as a negative electrode terminal. At this time, an upper insulating plate and a lower insulating plate both made of resin were placed on the top and the bottom of the electrode group, respectively. The battery case used here was a bottomed cylindrical iron case (outer diameter: 21 mm, height: 70 mm). Next, the non-aqueous electrolyte was injected into the battery case, and then, the opening of the battery case was closed using a metal sealing body also serving as a positive electrode terminal. At this time, a gasket made of resin was interposed between the sealing body and the open end of the battery case. The other end of the positive electrode lead was connected to the sealing body, and the other end of the negative electrode lead was connected to the inner bottom surface of the battery case. In this way, a 21700-type cylindrical non-aqueous electrolyte secondary battery was fabricated.

With the ratios of Ni, Co, Al, Mn, and Fe in the composite oxide varied as shown in Table 1, non-aqueous electrolyte secondary batteries A1 to A4 and B1 differing in the composition of the composite oxide were produced. The batteries A1 to A4 correspond to Examples 1 to 4, and the battery B1 corresponds to Comparative Example 1.

### <<Comparative Examples 2 and 3>>

In the preparation of the non-aqueous electrolyte, without adding LiBF₂(C₂O₄) to the non-aqueous solvent, only LiPF₆ was dissolved therein. The concentration of LiPF₆ in the non-aqueous electrolyte was set to 1.5 mol/L.

In the same manner as in Example 1 except the above, and, with the ratios of Ni, Co, Al, Mn, and Fe in the composite oxide set to the values as shown in Table 1, non-aqueous electrolyte secondary batteries B2 and B3 were produced. The batteries B2 and B3 correspond to Comparative Examples 2 and 3.

### <<Reference example 1>>

### (1) Production of negative electrode

Water was added to a negative electrode mixture and stirred, to prepare a negative electrode slurry. The negative electrode mixture used here was a mixture of artificial graphite (average particle diameter: 25 µm), styrene-butadiene rubber (SBR), and sodium carboxymethylcellulose (CMC-Na). In the negative electrode mixture, the mass ratio between the artificial graphite, SBR, and CMC-Na was set to 100:1:1.

The negative electrode slurry was applied onto a surface of a copper foil, and the applied film was dried, and then rolled, to give a laminate having a negative electrode mixture layer formed on both sides of the copper foil. The laminate was cut into a predetermined size, to produce a negative electrode.

### (2) Preparation of non-aqueous electrolyte

A non-aqueous electrolyte was prepared by dissolving LiPF₆ at a concentration of 1.2 mol/L in a mixed solvent of ethylene carbonate (EC) and diethyl carbonate (DEC) (1:1 by volume ratio).

The negative electrode and the non-aqueous electrolyte obtained above were used.

Except for the above, in the same manner as in Example 1, a battery C1 was produced. The thickness of the negative electrode mixture layer was adjusted so as not to allow Li metal to deposit on the surface of the negative electrode during charge. That is, the design capacity Cn of the negative electrode accounted for by the negative electrode active material in the negative electrode mixture layer was set higher than the design capacity Cp of the positive electrode.

The batteries A1 to A4, B1 to B3, and C1 were evaluated as follows.

### [Evaluation: Measurement of gas generation rate]

With respect to the batteries obtained above, in an environment of 25 °C, a constant-current charging was performed at a current of 0.1 C until the voltage reached 4.3 V, and after the constant-current charging, a constant-voltage charging was performed at a voltage of 4.3 V until the current reached 0.01 C. In this manner, the batteries in a fully charged state were obtained. In the batteries A1 to A4 and B1 to B4, Li metal was allowed to deposit on the surface of the negative electrode current collector during charge. In the battery C1, lithium ions were allowed to be absorbed into the graphite in the negative electrode mixture during charge.

The batteries in a fully charged state were each housed in a sealed container, and an internal short circuit was caused in the battery by nail penetration, so that the battery generates heat. At this time, the changes over time in the amount of gas generated from the battery were measured. The amount of gas generated from the battery was calculated by measuring the pressure P in the sealed container with a pressure sensor, and the temperature T in the sealed container with a thermocouple, and using a gas state equation: PV = nRT, where V represents the inner volume of the sealed container, n represents the amount of substance of gas, and R represents a gas constant. Based on the measurement results, the maximum value of the amount of gas generated per unit time was determined as the gas generation rate. The gas generation rate was expressed, as an index, with the gas generation rate of the battery B1 of Comparative Example 1 taken as 100.

Evaluation results are shown in Table 1. Table 1 shows the composition of the composite oxide used in each battery and whether the electrolyte was with or without the addition of LiFOB, together with the evaluation results of the gas generation rate.

**[Table 1]**

| Battery | Composition of composite oxide | | | | | Electrolyte | Gas generation rate |
|---|---|---|---|---|---|---|---|
| | Ni | Co | Al | Mn | Fe | LiFOB | |
| A1 | 80% | 2% | 3% | 5% | 10% | With | 4.5 |
| A2 | 85% | - | 3% | - | 12% | With | 30.6 |
| A3 | 88% | - | 3% | - | 9% | With | 30.6 |
| A4 | 91% | - | 3% | - | 6% | With | 65.6 |
| B1 | 91% | 4.5% | 4.5% | - | - | With | 100 |
| B2 | 91% | 4.5% | 4.5% | - | - | Without | 149 |
| B3 | 80% | 2% | 3% | 5% | 10% | Without | 137 |
| C1 | 91% | 4.5% | 4.5% | - | - | Without | 11.8 |

In the batteries A1 to A4 of Examples 1 to 4, as compared to in the batteries B 1 to B3 of Comparative Examples 1 to 3, the gas generation rate was low, and the rise in battery internal pressure was suppressed.

Comparison between the battery B1 and the battery B2 including the composite oxides having the same composition shows that in the battery B 1, in which LiFOB was added to the electrolyte, the gas generation rate was reduced to approximately 2/3 of that of the battery B2. On the other hand, comparison between the battery A1 and the battery B3 including the composite oxides having the same composite shows that, in the battery A1 containing Fe in the composite oxide, in which LiFOB was added to the electrolyte, the gas generation rate was reduced to as small as approximately 1/30 of that of battery B3, and a remarkable improvement in gas generation rate was observed.

In the battery A1, even as compared to in the battery C1 of Reference Example 1 in which Li ions were absorbed into the graphite in the negative electrode mixture during charge, the gas generation rate was significantly reduced, and the rise in battery internal pressure was able to be suppressed.

### [Industrial Applicability]

The non-aqueous electrolyte secondary battery according to the present disclosure is suitably used as, for example, a power source for mobile devices such as smartphones, a driving power source for vehicles such as electric cars, and a power storage apparatus for storing natural energy such as solar energy.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug

## Claims

1. A non-aqueous electrolyte secondary battery, comprising:
a positive electrode; a negative electrode; and a non-aqueous electrolyte, wherein
lithium metal deposits on the negative electrode during charge, and the lithium metal dissolves from the negative electrode into the non-aqueous electrolyte during discharge,
the positive electrode includes a positive electrode active material,
the positive electrode active material includes a composite oxide containing lithium and a transition metal,
the non-aqueous electrolyte contains an oxalate salt, and
the composite oxide contains, as the transition metal, Ni and at least one selected from the group consisting of Fe, V, Ti, and Nb, and has a structure based on a layered rock-salt type crystal structure.

2. The non-aqueous electrolyte secondary battery according to claim 1, wherein the composite oxide further contains A1.

3. The non-aqueous electrolyte secondary battery according to claim 1 or 2, wherein
the composite oxide is represented by LiNi_{1-x-y}M¹ₓM²yO₂, where 0.03 ≤ x ≤ 0.15, and 0.02 ≤ y ≤ 0.6,
M¹ contains at least one selected from the group consisting of Fe, Ti, V, and Nb, and
M² contains at least one selected from the group consisting of Al, Mn, and Co.

4. The non-aqueous electrolyte secondary according to claim 3, wherein the composite oxide is represented by LiNi_{1-x-y}FeₓM²_{y}O₂, where 0.03 ≤ x ≤ 0.15 and 0.02 ≤ y ≤ 0.6.

5. The non-aqueous electrolyte secondary battery according to claim 3 or 4, wherein 0.02 ≤ y ≤ 0.27.

6. The non-aqueous electrolyte secondary battery according to any one of claims 3 to 5, wherein 0.06 ≤ x ≤ 0.15.

7. The non-aqueous electrolyte secondary battery according to any one of claims 1 to 6, wherein the oxalate salt includes lithium difluorooxalate borate.
